# EUROPÄISCHE PATENTSCHRIFT

(11) **EP 0 360 969 B1**
(45) Veröffentlichungstag und Bekanntmachung des Hinweises auf die Patenterteilung: **15.12.1993**
(21) Anmeldenummer: 89107671.3
(22) Anmeldetag: 27.04.1989
(51) Int. Cl.: G06K 19/08, B42D 15/02

(54) **Beugungselement**
Diffraction element
Elément de diffraction

(30) Priorität: 30.09.1988 CH 3643/88
(43) Veröffentlichungstag der Anmeldung: 04.04.1990
(73) Patentinhaber: Landis & Gyr Business Support AG, 6301 Zug (CH)
(72) Erfinder: Antes, Gregor, CH-8044 Zürich (CH)
(74) Vertreter: Müller, Hans-Jürgen, Dipl.-Ing.

(56) Entgegenhaltungen:
- EP-A- 0 075 674
- CH-A- 594 936
- US-A- 4 108 367
- US-A- 4 544 836

## Beschreibung

Die Erfindung bezieht sich auf ein Beugungselement gemäss dem Oberbegriff des Anspruchs 1 und auf eine Einrichtung zum maschinellen optischen Lesen von Informationen aus dem Beugungselement.

Solche Beugungselemente eignen sich beispielsweises als Echtheitsmerkmal für Wertdokumente, wie z. B. Banknoten, Schecks, Kreditkarten und dergleichen.

Ein Beugungselement der im Oberbegriff des Anspruchs 1 genannten Art ist in der CH-Anmeldung 00805/88-4 beschrieben. Dieses Beugungselement weist Reliefstrukturen auf, die Echtheitsinformationen enthalten beispielsweise in Form von Bildern, deren Farben und Leuchtkraft vom Betrachtungswinkel abhängen, und können daher mittels herkömmlicher Kopiergeräte nicht vervielfältigt werden. Die Reliefstrukturen weisen z. B. Querschnittsformen bekannter periodischer Funktionen auf mit den für die Beugung von sichtbarem Licht wirksamen Spatialfrequenzen von mehr als 10 Linien pro mm. Herstellungsbedingte Grenzen beschränken den praktisch nutzbaren Bereich auf etwa 2500 Linien/mm. Aber auch Querschnittsformen mit aperiodischen Funktionen, die lokal Spatialfrequenzen aus diesem Bereich enthalten, wie z. B. Mattstrukturen, sind anwendbar. Der Höhenunterschied dieser Reliefstrukturen ist typisch zwischen 50 nm und 10'000 nm gewählt.

Ein Beugungselement, das aus der CH-PS 594 936 bekannt ist, besitzt maschinenlesbare, schwer kopierbare beugungsoptisch kodierte Markierungen. Sie sind als mikroskopische Reliefstrukturen in einen dünnen, beispielsweise auf Papier angebrachten Thermoplastträger eingeprägt, mit einem optisch wirksamen Ueberzugmaterial geschützt und beugen auffallendes Licht.

Der Erfindung liegt die Aufgabe zugrunde, ein schwer kopierbares optisch aktives Beugungselement als Echtheitsmerkmal zu schaffen, das eine zusätzliche optische Markierung in einem visuell sichtbaren, optisch einprägsamen Bild enthält, das aus Teilflächen zusammengesetzt und von der Markierung unabhängig ist.

Die Erfindung ist durch Anspruch 1 definiert.

Die genannte Aufgabe wird erfindungsgemäss durch die Merkmale des Anspruchs 1 gelöst. Eine Einrichtung zum maschinellen Lesen von Informationen aus dem Beugungselement ist in Anspruch 9 angegeben. Vorteilhafte Ausgestaltungen ergeben sich aus den Unteransprüchen.

Nachfolgend werden Ausführungsbeispiele der Erfindung anhand der Zeichnung näher erläutert.

Es zeigt:
- Fig. 1: eine Ausführung eines Beugungselementes mit Teilflächen,
- Fig. 2: ein spiegelsymmetrisches Paar von Teilflächen mit asymmetrischen Reliefprofilen und
- Fig. 3: eine Einrichtung zum Lesen von Markierungen.

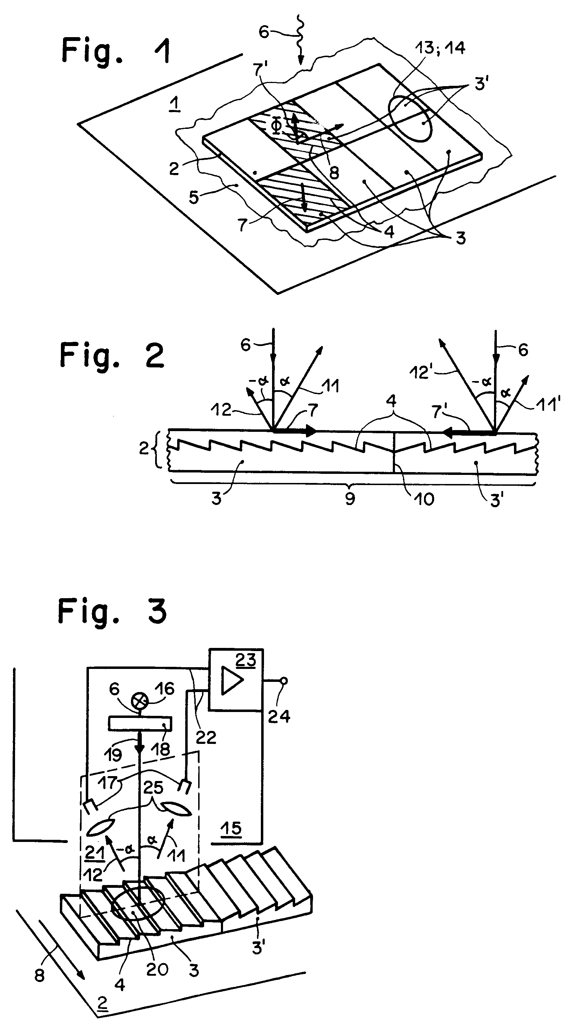

In der Fig. 1 bedeutet 1 ein Dokument, 2 ein Beugungselement und 3 sowie 3′ Teilflächen. Das Dokument 1 ist ein Wertpapier, eine Banknote, ein Ausweisdokument, eine Kreditkarte oder dergleichen. Es weist an wenigstens einer vorbestimmten Stelle das Beugungselement 2 mit eingeprägten, mikroskopisch feinen Reliefstrukturen 4 als Echtheitsmerkmal auf.

Besteht das Dokument 1 aus einem thermoplastischen Kunststoff, ist das Beugungselement 2 direkt auf das Dokument 1 eingeprägt.

Besteht das Dokument 1 aus Papier, ist das Beugungselement 2 vorteilhaft auf einem Trager 5 eingeprägt. Beispielsweise ist der Träger 5 als Selbstklebe-Etikett ausgebildet, das sich mit dem Dokument 1 derart fest verbindet, dass die Reliefstruktur 4 bei einem Ablöseversuch des Trägers 5 vom Dokument 1 zerstört wird. Wie aus der CH-PS 594 936 bekannt ist, ist als Träger 5 auch eine dünne auf Papier aufgebrachte thermoplastische Farbschicht oder eine Heissprägefolie verwendbar.

Die Reliefstruktur 4 weist eine Spatialfrequenz f von wenigstens 50 Linien pro mm auf und vermag daher auf die Reliefstruktur 4 einfallendes Licht 6 um einen vorbestimmten Winkel zu beugen. Diese Eigenschaft der Reliefstruktur 4 ist durch mindestens drei Parameter bestimmt, die Form des Reliefprofils, die Spatialfrequenz f und die Orientierung der Reliefstruktur 4 mittels eines Gittervektors 7 bzw. 7′.

Der Gittervektor 7 bzw. 7′ liegt in der Ebene des Beugungselementes 2 und weist bezogen auf eine vorbestimmte Richtung 8 auf dieser Ebene einen beispielsweise im Gegenuhrzeigersinn gemessenen Azimutwinkel Φ auf, der die Orientierung der Reliefstruktur 4 beschreibt.

Für die Reliefstrukturen 4 werden symmetrische und asymmetrische Formen des Reliefprofils verwendet. Ist das Reliefprofil asymmetrisch, weist die Orientierung der Reliefstrukturen 4 unterscheidbare Azimutwinkel Φ im Bereich von 0° bis 360° auf, während diese bei einem symmetrischen Reliefprofil zwischen 0° und 180° begrenzt sind.

Die Beugung des Lichtes 6 an der Reliefstruktur 4 ist in Reflexion und in Transmission beobachtbar, wobei im letzteren Fall die Wahl des Materials für das Dokument 1 und allenfalls für den Träger 5 stark eingeschränkt ist. Die Reliefstruktur 4 ist in an sich bekannter Weise mit einem optisch aktiven Ueberzug abgedeckt, der die Reliefstruktur 4 schützt.

Das Beugungselement 2 ist in wenigstens zwei Teilflächen 3, 3′ eingeteilt. Die gezeichneten Grenzen der verschiedenen Teilflächen 3, 3′ sind nur durch die zeichnerische Darstellung bedingt, da jede Teilfläche 3 bzw. 3′ eine mikroskopische Reliefstruktur 4 aufweist, die sich in wenigstens einem Parameter von den benachbarten Reliefstrukturen 4 unterscheidet.

Vorteilhaft ist das Beugungselement 2 mosaikartig in eine Vielzahl von Teilflächen 3, 3′ aufgeteilt, wobei diese Aufteilung graphisch gestaltet ist. Bei normaler, polychromatischer Beleuchtung ist bei visueller Betrachtung des Beugungselementes 2 ein von der Richtung und der Art der Beleuchtung abhängiges Bild sichtbar. Die Farben der Teilflächen 3, 3′ hängen von den Parametern der Reliefstrukturen 4, der Betrachtungsrichtung und dem einfallenden Licht 6 ab. Bei Tageslicht besitzt dieses Beugungselement 2 Teilflächen 3, 3′ mit Farben grosser Leuchtkraft.

Eine dunkle Fläche ist für die Bildgestaltung ein notwendiges Element. Mattstrukturen erfüllen zwar diese Anforderung, weisen aber den Nachteil auf, dass sie mittels absorbierender Farbe vortäuschbar sind und dass sie keine zusätzliche Informationen vermitteln können.

Weisen in wenigstens einem zusammenhängenden Teil des Beugungselementes 2 die Teilflächen 3, 3′ eine grösste Abmessung von weniger als 0,1 mm auf, kann das unbewaffnete Auge die Form der Teilflächen 3, 3′ nicht mehr unterscheiden. Wenn die Reliefstrukturen solcher kleiner Teilflachen 3, 3′ eine zufällige Orientierung des Gittervektors 7 bzw. 7′ in der Ebene des Beugungselementes 2 besitzen, vermischt sich für den Betrachter das an diesen kleinen, zusammenhängenden Teilflächen 3, 3′ gebeugte Licht 6 des Umgebungslichtes zum optischen Effekt einer matten Fläche, die sich sehr auffällig von den leuchtenden Farben des gebeugten Lichtes aus den grösseren Teilflächen 3, 3′ abhebt. Teilflächen 3, 3′ mit diesem Effekt eignen sich daher vorteilhaft zur graphischen Gestaltung des Bildes anstelle einer Mattstruktur.

Die Reliefstruktur 4 wenigstens einer ersten Teilfläche 3 und die Reliefstruktur 4 wenigstens einer zweiten Teilfläche 3′ (Figur 2) weisen ein vorbestimmtes asymmetrisches Reliefprofil mit gleicher Spatialfrequenz f auf, wobei sich die Azimutwinkel Φ, Φ′ der beiden Gittervektoren 7 und 7′ um eine Differenz von 180° unterscheiden, d. h. die Asymmetrie der beiden Reliefstrukturen 4 der beiden Teilflächen 3, 3' ist spiegelsymmetrisch. In der Zeichnung ist die Spiegelsymmetrie der beiden Reliefprofile durch eine asymmetrische Dreiecksfunktion in Bezug auf eine gemeinsame Grenze 10 symbolisch dargestellt, wobei die Orientierung der Reliefstrukturen 4 mittels der in der Zeichnungsebene liegenden, gegeneinander gerichteten Gittervektoren 7, 7′ angedeutet ist. Die beiden Teilflächen 3, 3′ grenzen unmittelbar aneinander und bilden ein spiegelsymmetrisches Paar 9.

Fällt monochromatisches Licht 6 senkrecht auf die Teilflächen 3, 3′ mit reflektierenden Reliefstrukturen 4 ein, so bestimmen ein Strahl des einfallenden Lichtes 6 und die Gittervektoren 7, 7′ eine Beugungsebene, die in der Figur 2 mit der Zeichnungsebene übereinstimmt. Die Teilflächen 3, 3′ beugen das Licht 6 in einen ersten Strahl 11 bzw. 11′ um einen Beugungswinkel α und in einen zweiten Strahl 12 bzw. 12′ symmetrisch zum Strahl des einfallenden Lichtes 6 um einen Beugungswinkel -α. Die Wellenlänge des Lichtes 6 und die Spatialfrequenz f bestimmen den Betrag des Beugungswinkels α.

Infolge der Asymmetrie der Reliefstrukturen 4 sind die Intensitäten der Strahlen 11, 12 bzw. 11′, 12′ in der Beugungsebene nicht symmetrisch zum einfallenden Licht 6 verteilt. In der Zeichnung wird beispielsweise das einfallende Licht 6 an der ersten Teilfläche 3 gebeugt, wobei die Intensität des ersten Strahls 11 grösser ist als die Intensität des zweiten Strahls 12. Für die zweite Teilfläche 3′ des spiegelsymmetrischen Paares 9 ist die Verteilung der Intensitäten der Strahlen 11′, 12′ gerade spiegelbildlich. Wird nun das Beugungselement 2 unter dem Winkel α betrachtet, erscheint die erste Teilfläche 3 daher heller als die zweite Teilfläche 3′. Die Helligkeiten der Teilflächen 3, 3′ sind vertauscht, wenn das Beugungselement 2 unter dem Winkel -α betrachtet wird. Im Gegensatz dazu verändern andere Teile des Beugungselementes 2, in denen die Reliefstrukturen 4 symmetrische Reliefprofile aufweisen, ihre Helligkeit nicht. Diese Veränderung des Bildes z. B. beim Kippen des Dokumentes 1 ist visuell sehr auffällig. Daher ist dieses Vertauschen der Helligkeiten von Teilflächen 3, 3′ ein leicht erkennbares und einprägsames Echtheitsmerkmal.

Das Verhältnis zwischen der Intensität der ersten Strahlen 11, 11′ und der Intensität der zweiten Strahlen 12, 12′ erreicht einen typischen Wert von 3, wobei bei bezüglich der Form optimierten Reliefprofilen auch Werte von mehr als 30 erreicht werden.

In einer Ausführung des Beugungselementes 2 (Figur 1 und 2) wird die graphische Darstellung durch eine Einteilung in erste Teilflächen 3 graphisch gestaltet. Jede Teilfläche 3 weist ein asymmetrisches Reliefprofil und einen Azimutwinkel Φ der Reliefstruktur 4 aus dem Bereich zwischen 0° und 180° auf. Dieser ersten Aufteilung wird wenigstens eine zusätzliche optische Markierung 13 mit einer Berandung 14 überlagert. Jede innerhalb der Berandung 14 gelegene erste Teilfläche 3 ist durch die zweite Teilfläche 3′ des entsprechenden spiegelsymmetrischen Paares 9 ersetzt. Die Berandung 14 kann auch eine der Teilflächen 3, 3′ in ein spiegelsymmetrisches Paar 9 teilen. Die Markierung 13 ist daher mittels der Asymmetrie des Reliefprofils festgelegt. Für das unbewaffnete Auge verursachen diese Markierungen 13 nur eine geringe Störung des Bildeindruckes.

Beispielsweise haben alle asymmetrischen Reliefstrukturen 4 die gleiche Spatialfrequenz f. Die Teilflächen 3, 3′ unterscheiden sich nur im Azimutwinkel Φ, Φ′ der Reliefstruktur 4. Vorteilhaft wird der Winkel Φ in den ersten Teilflächen 3 auf den Bereich 30° bis 150° und der Winkel Φ′ in den zweiten Teilflächen 3′ auf den Bereich 210° bis 330° beschränkt, damit die vorbestimmte Richtung 8 zum Auslesen ausgezeichnet wird. Beim Kippen des Dokumentes 1 um eine Achse, die senkrecht zur Richtung 8 ist und in der Ebene des Beugungselementes 2 liegt, vertauschen die optische Markierung 13 und das Bild ihre Intensitäten, wenn dies symmetrisch zur Richtung des einfallenden Lichtes 6 erfolgt.

Die optische Markierung 13 weist die Form von Ziffern, Buchstaben oder anderen graphischen Symbolen auf. Sie sind auch als Elemente der künstlerischen Ausgestaltung der ersten Aufteilung des Beugungselementes 2 verwendbar.

Beispielsweise weist die Markierung 13 die Form eines aus dem Detailhandel bekannten maschinenlesbaren Strichkodes auf und enthält eine auslesbare Information. Die zweiten Teilflächen 3′ entsprechen gedruckten Elementen ("Striche") des Strichkodes vor einem "Hintergrund" aus den ersten Teilflächen 3.

Ein in der Figur 3 dargestellter Leser 15 zum maschinellen optischen Lesen von Informationen aus dem Beugungselement 2 weist eine Lichtquelle 16 und Photosensoren 17 auf. Ein optischer Kollimator 18 formt einen Auslesestrahl 19, wobei der Ausleselichtstrahl 19 auf der Teilfläche 3 bzw. 3′ eine vorbestimmt geformte Fläche 20 der Reliefstruktur 4 beleuchtet, beispielsweise Kreis, Rechteck oder dergleichen.

Vorteilhaft ist die Lichtquelle 16 ein Halbleiterlaser, da sich für ein maschinelles Auslesen monochromatisches Licht 6 mit hoher Intensität ohnehin besser eignet.

Fällt der Auslesestrahl 19 des Lesers 15 senkrecht auf das Dokument 1 ein, bestimmt der Auslesestrahl 19 eine Ausleseebene 21, die die vorbestimmte Richtung 8 des Beugungselementes 2 als Senkrechte aufweist. In dieser Ebene 21 sind symmetrisch zum Auslesestrahl 19 zwei Photosensoren 17 angeordnet, die die Strahlen 11, 12 bzw. die Strahlen 11′, 12′ unter dem Beugungswinkel α, -α empfangen und in elektrische Signale umwandeln.

Eine mit den Photosensoren 17 über Leitungen 22 verbundene elektronische Schaltung 23 erzeugt an einem Ausgang 24 die Differenz dieser Signale der beiden Photosensoren 17, die ein Mass für die Asymmetrie der in der Fläche 20 beleuchteten Reliefstruktur 4 ist. Falls die in den Markierungen 13 kodierten Informationen selbsttaktend kodiert sind, erzeugt beispielsweise die Schaltung 23 auf an sich bekannte Art eine binäre Signalfolge mit einem Taktsignal für ein hier nicht dargestelltes Gerät.

Auch kann wenigstens eine Reliefstruktur 4 eine mit einer vorbestimmten Spatialfrequenzamplitude A modulierte Spatialfrequenz f₀ aufweisen. In der Reliefstruktur 4 sind daher alle Spatialfrequenzen f aus einem Bereich von f₀-A bis F₀+A wirksam. Dies bewirkt eine vorbestimmte Auffächerung der Strahlen 11, 11′, 12, 12′ in der Beugungsebene, erhöht die Ablesesicherheit bei nicht ganz ebenen Trägern 5 und verringert die Anforderung an den Leseabstand sowie an die Richtung des einfallenden Auslesestrahls 19.

Die Verwendung von mehreren Spatialfrequenzen f₀ in den Teilflächen 3, 3′ erhöht die künstlerische Gestaltungsfreiheit.

In einem Leser 15 für die Ausführung des Beugungselementes 2 mit wenigstens einem Spatialfrequenzbereich und einem Azimutwinkelbereich weisen die Photosensoren 17 eine grosse Apertur mit einen vorbestimmten Bereich für den Beugungswinkel α und für den Azimutwinkels Φ auf. Die grosse Apertur ist mittels grossflächiger Photosensoren 17 oder mittels abbildender optischer Mittel 25 zwischen jedem Photosensor 17 und der beleuchteten Fläche 20 erreichbar.

In einem Ausführungsbeispiel des Lesers 15 weist die Apertur für den Beugungswinkel α den Bereich 10° bis 70°, und für den Azimutwinkel Φ den Bereich +25° bis 155° und für den Azimutwinkel Φ′ den Bereich 205° bis 335° auf. Diese grosse Apertur ermöglicht ein sicheres Ablesen der optischen Markierungen 13 auch bei einer nicht exakten Ausrichtung des Lesers 15 auf das Beugungselement 2.

In der Figur 3 sind die optischen Mittel 25 als Linsen dargestellt. Diese Linsen können auch durch reflektierende Beugungsgitter ersetzt werden, die die Strahlen 11, 12 in den entsprechenden Photosensor 17 fokussieren.

## Patentansprüche

1. Beugungselement, das eingeprägte, optisch wirksame mikroskopische Reliefstrukturen mit einer Spatialfrequenz (f) von mehr als 50 Linien pro mm aufweist und das in Teilflächen eines visuell sichtbaren Bildes eingeteilt ist, als Echtheitsmerkmal für ein Dokument, dadurch gekennzeichnet, dass das Beugungselement (2) wenigstens ein spiegelsymmetrisches Paar (9) einer ersten Teilfläche (3) und einer zweiten Teilfläche (3′) mit einer vorbestimmten asymmetrischen Reliefstruktur (4) aufweist, wobei die Differenz zwischen einem Azimutwinkel (Φ) in der ersten Teilfläche (3) und dem Azimutwinkel (Φ′) in der zweiten Teilfläche (3′) 180° beträgt, dass sich die Reliefstruktur (4) in jeder Teilfläche (3, 3′) in wenigstens einem Parameter von der Reliefstruktur (4) in den benachbarten Teilflächen (3, 3′) unterscheidet und dass wenigstens eine zusätzliche optische Markierung (13) die Asymmetrie von Reliefprofilen in den Teilflächen (3, 3′) vorbestimmt.

2. Beugungselement nach Anspruch 1, dadurch gekennzeichnet, dass die beiden Teilflächen (3, 3′) wenigstens eines spiegelsymmetrischen Paares (9) eine gemeinsame Grenze (10) aufweist.

3. Beugungselement nach Anspruch 1 oder 2, dadurch gekennzeichnet, dass in wenigstens einem Teil des Beugungselementes (2) die Teilflächen (3, 3′) eine grösste Abmessung von weniger als 0,1 mm aufweisen und dass der Azimutwinkel (Φ) in jeder dieser Teilflächen (3, 3′) zufällig ist.

4. Beugungselement nach einem der vorhergehenden Ansprüche, dadurch gekennzeichnet, dass die Aufteilung des Beugungselementes (2) in Teilflächen (3, 3′) graphisch gestaltet ist.

5. Beugungselement nach einem der vorhergehenden Ansprüche, dadurch gekennzeichnet, dass der Bereich der Azimutwinkel (Φ), die den ersten Teilflächen (3) zugeordnet sind, kleiner als 180° ist.

6. Beugungselement nach einem der vorhergehenden Ansprüche, dadurch gekennzeichnet, dass die Markierung (13) die Form von Ziffern, Buchstaben oder anderen graphischen Symbolen aufweist.

7. Beugungselement nach Anspruch 5, dadurch gekennzeichnet, dass die Teilflächen (3, 3′) der Merkmale (13) einen maschinenlesbaren Strichkode darstellen.

8. Beugungselement nach einem der vorhergehenden Ansprüche, dadurch gekennzeichnet, dass ein Träger (5) des Beugungselementes (2) ein Selbstklebe-Etikett zum Sichern eines Dokumentes (1) ist.

9. Einrichtung zum maschinellen optischen Lesen eines Beugungselementes nach einem der Ansprüche 5 bis 8, dadurch gekennzeichnet, dass eine Lichtquelle (16) mittels eines optischen Kollimators (18) einen Auslesestrahl (19) erzeugt, dass in wenigstens einer Ausleseebene (21) symmetrisch zum Auslesestrahl (19) ein Paar Photosensoren (17) angeordnet sind, die unter einem Beugungswinkel (α, -α) gebeugtes Licht empfangen, dass jeder Photosensor (17) des Paares mittels einer Leitung (22) mit einer elektronischen Schaltung (23) verbunden ist und dass die Schaltung (23) über einen Ausgang (24) die laufend gebildete Differenz von Signalen abgibt, die die Schaltung (23) von den beiden Photosensoren (17) über die Leitungen (22) erhält.

10. Einrichtung nach Anspruch 9, dadurch gekennzeichnet, dass die Photosensoren (17) eine durch optische Mittel (25) vorbestimmte Apertur aufweisen.

## Claims

1. A diffraction element which has embossed, optically effective, microscopic relief structures with a spatial frequency (f) of more than 50 lines per mm and which is divided into surface portions of a visually perceptible image, as an authenticity feature for a document, characterised in that the diffraction element (2) has at least one mirror-symmetrical pair (9) of a first surface portion (3) and a second surface portion (3') with a predetermined asymmetrical relief structure (4), wherein the difference between an azimuth angle (Φ) in the first surface portion (3) and the azimuth angle (Φ') in the second surface portion (3') is 180°, that the relief structure (4) in each surface portion (3, 3') differs in terms of at least one parameter from the relief structure (4) in the adjacent surface portions (3, 3') and that at least one additional optical marking (13) predetermines the asymmetry of relief profiles in the surface portions (3, 3').

2. A diffraction element according to claim 1 characterised in that the two surface portions (3, 3') of at least one mirror-symmetrical pair (9) have a common boundary (10).

3. A diffraction element according to claim 1 or claim 2 characterised in that in at least a part of the diffraction element (2) the surface portions (3, 3') have a largest dimension of less than 0.1 mm and that the azimuth angle (Φ) is random in each of those surface portions (3, 3').

4. A diffraction element according to one of the preceding claims characterised in that the division of the diffraction element (2) into surface portions (3, 3') is of a graphic configuration.

5. A diffraction element according to one of the preceding claims characterised in that the range of the azimuth angles (Φ) which are associated with the first surface portions (3) is less than 180°.

6. A diffraction element according to one of the preceding claims characterised in that the marking (13) is in the shape of digits, letters or other graphic symbols.

7. A diffraction element according to claim 5 characterised in that the surface portions (3, 3') of the features (13) represent a machine-readable bar code.

8. A diffraction element according to one of the preceding claims characterised in that a carrier (5) for the diffraction element (2) is a self-adhesive label for safeguarding a document (1).

9. A device for mechanical optical reading of a diffraction element according to one of claims 5 to 8 characterised in that a light source (16) produces a read-out beam (19) by means of an optical collimator (18), that disposed in at least one read-out plane (21) symmetrically relative to the read-out beam (19) is a pair of photoelectric sensors (17) which receive light that is diffracted at a diffraction angle (α, -α), that each photoelectric sensor (17) of the pair is connected to an electronic circuit (23) by means of a line (22) and that the circuit (23), by way of an output (24), outputs the continuously formed difference between signals which the circuit (23) receives from the two photoelectric sensors (17) by way of the lines (22).

10. A device according to claim 9 characterised in that the photoelectric sensors (17) have an aperture which is predetermined by optical means (25).

## Revendications

1. Elément de diffraction qui présente des structures en relief microscopiques optiquement efficaces estampées avec une fréquence spatiale (f) supérieure à 50 traits par mm et qui est partagé en surfaces partielles d'une image visible à l'oeil, comme caractéristique d'authenticité d'un document, caractérisé en ce que l'élément de diffraction (2) comprend au moins une paire (9) symétrique par rapport à un plan d'une première surface partielle (3) et d'une deuxième surface partielle (3') avec une structure en relief asymétrique prédéterminée (4), la différence entre un angle azimutal (φ) dans la première surface partielle (3) et l'angle azimutal (φ') dans la deuxième surface partielle (3') vaut 180°, de sorte que la structure en relief (4), dans chaque surface partielle (3,3') se différencie par au moins un paramètre de la structure en relief (4) dans les surfaces partielles contiguës (3,3') et qu'au moins un marquage optique supplémentaire (13) prédétermine l'asymétrie des profilés en relief des surfaces partielles (3, 3').

2. Elément de diffraction selon la revendication 1 caractérisé en ce que les deux surfaces partielles (3, 3') d'au moins une paire (9) symétrique par rapport à un plan présentent une frontière commune (10).

3. Elément de diffraction selon la revendication 1 ou 2, caractérisé en ce qu'en au moins une partie de l'élément de diffraction (2) les surfaces partielles (3, 3') présentent leur plus grande dimension avec moins de 0,1 mm et que l'angle azimutal (φ) dans chacune de ces surfaces partielle (3, 3') est aléatoire.

4. Elément de diffraction selon l'une des revendications précédentes caractérisé en ce que le partage de l'élément de diffraction (2) en surfaces partielles (3, 3') est matérialisé graphiquement.

5. Elément de diffraction selon l'une des revendications précédentes, caractérisé en ce que l'intervalle des angles azimutaux (φ), qui sont affectés aux premières surfaces partielles (3) est inférieur à 180°.

6. Elément de diffraction selon l'une des revendications précédentes, caractérisé en ce que le marquage (13) présente la forme de chiffres, lettres et autres symboles graphiques.

7. Elément de diffraction selon la revendication 5, caractérisé en ce que les surfaces partielles (3, 3') présentent les caractéristiques (13) d'un code-barre qui peut être lu par une machine.

8. Elément de diffraction selon l'une des revendications précédentes, caractérisé en ce qu'un support (5) de l'élément de diffraction (2) est une étiquette autocollante pour protéger un document (1).

9. Dispositif de lecture optique par une machine d'un élément de diffraction selon l'une des revendications 5 à 8, caractérisé en ce qu'une source de lumière (16) produit un rayon de lecture (19) au moyen d'un collimateur optique (18), que dans au moins un plan de lecture (21) une paire de capteurs photosensibles (17) est disposée symétriquement par rapport à un rayon de lecture (19), qui reçoivent la lumière diffractée selon un angle de diffra ction (α,-α), que chaque capteur photosensible (17) de la paire est relié par un conducteur (22) à un circuit électronique (23) et que le circuit (23) délivre à une sortie (24) la différence des signaux calculée en permanence, que le circuit (23) reçoit des deux capteurs photosensibles (17) par les conducteurs (22).

10. Dispositif selon la revendication 9 caractérisé en ce que les capteurs photosensibles (17) présentent une ouverture déterminée par des moyens optiques (25).
